# EUROPEAN PATENT APPLICATION

(11) **EP 1 649 924 A2**
(43) Date of publication of application: **26.04.2006**
(21) Application number: 05023039.0
(22) Date of filing: 21.10.2005
(51) Int. Cl.: B01D 53/94, B01J 37/02

(54) **Exhaust gas purifying catalyst and method of manufacturing exhaust gas purifying catalyst**

(30) Priority: 21.10.2004 JP 2004307126
(71) Applicant: Toyota Jidosha Kabushiki Kaisha, Toyota-shi, Aichi-ken 471-8571 (JP)
(72) Inventor: Nakano, Yasuaki, Toyota-shi Aichi-ken 471-8571 (JP); Hirota, Shinya, Toyota-shi Aichi-ken 471-8571 (JP); Yoshida, Kohei, Toyota-shi Aichi-ken 471-8571 (JP)
(74) Representative: TBK-Patent

(57) **Abstract**

An exhaust gas purifying catalyst used for purifying exhaust gas of an internal combustion engine, in which a honeycomb substrate .is coated with a catalyst support having an SOx keeping ability for keeping in its interior SOx contained in the exhaust gas, wherein a cell wall of the honeycomb substrate has a pore, the interior of the pores is filled with the catalyst support so that the pore is coated, a surface of the cell wall is also coated with the catalyst support, and a catalyst support coating ratio that is defined as the ratio of the mass of the catalyst support applied on the cell wall surface to the mass of the catalyst support applied in the pore in the cell wall has a value between 0.25 and 1.25. Thus, there is provided an exhaust gas purifying catalyst that does not suffer from serious deterioration in the exhaust gas purifying capacity even without performing the SOx poisoning recovery control.

## Description

### (Background of the Invention)

### (Field of the Invention)

The present invention relates to an exhaust gas purifying catalyst for purifying exhaust gas of an internal combustion engine and a method of manufacturing the same

### (Description of Related Art)

Exhaust gas discharged from internal combustion engines contains carbon monoxide (CO), hydrocarbon (HC) and nitrogen oxides (NOx) etc.. The exhaust gas is generally purified from these harmful substances by means of an exhaust gas purifying catalyst that uses a precious metal such as platinum (Pt), palladium (Pd) and rhodium (Rh) as a catalytic component. Such an exhaust gas purifying catalyst typically includes a honeycomb substrate made of cordierite or the like having a large number of cells, coated with a catalyst support material such as Y-alumina and the aforementioned catalytic component supported thereon. In some cases, a promoter material such as an NOx occlusion material is also supported on the catalyst support.

Installation of the above-described exhaust gas purifying catalyst in an exhaust passage of an internal combustion engine lead to an increase in pressure loss due to an increase in the back pressure in the exhaust passage, though purification of the exhaust gas is achieved. To eliminat this drawback, there has been disclosed a technology relating to the exhaust gas purifying catalyst in which a catalyst support is applied as a coating in pores in the cell walls of the honeycomb substrate and on the surface of the cell walls with the amount of the catalyst support applied on the surface of the cell walls being 10 to 40 weight percent of the whole catalyst support and with the thickness of the coating layer of the catalyst support on the surface of the cell walls being smaller than 100 µm (see Japanese Patent Application Laid-Open No. 2003-245560). In addition, the patent documents listed below also disclose technologies relating to an exhaust gas purifying system of an internal combustion engine.
(1) Japanese Patent Application Laid-Open No. 2003-220342.
(2) Japanese Patent Application Laid-Open No. 2003-205246.

In the exhaust gas purifying catalyst formed by applying as a coating catalyst support in pores of the cell walls of the honeycomb substrate and on the surface of the cell walls, SOx contained in the exhaust gas is caught in the catalyst support. As the amount of the SOx kept in the exhaust gas purifying catalyst increases, the purifying capacity of the exhaust gas purifying catalyst dec eases. In view of this, SOx poisoning recovery control to forcibly discharge the SOx caught is conventionally performed. To this end, conventional exhaust gas purifying catalysts are required to have charateristics that they can easily catch SOx contained in the exhaust gas and easily discharge or release the SOx thus caught.

Therefore, in cases where the SOx poisoning recovery control is not performed as with, for example, the case where the lean-burn combustion is always performed, there is a possibility that the situation in which it becomes difficult for the above-described exhaust gas purifying catalyst to catch SOx contained in the exhaust gas sufficiently occurs.

### (Summary of the Invention)

In view of the above-described problem, the present invention has as an object to provide an exhaust gas purifying catalyst that does not suffer from significant deterioration in the exhaust gas purifying capacity even without performing the SOx poisoning recovery control.

To achieve the above object, in the present invention, attention has been paid on pores existing in the cell wall of a honeycomb substrate of the exhaust gas purifying catalyst and the ratio of the mass of the catalyst support to be applied in the cell wall and the mass of the catalyst support to be applied on the surface of (or outside) the cell wall. By filling the pores with a catalyst support that can keep SOx that has been contained in exhaust gas to coat the pores, it is possible to keep a larger amount of SOx in the exhaust gas purifying catalyst.

More specifically, according to the present invention, there is provided an exhaust gas purifying catalyst used for purifying exhaust gas of an internal combustion engine, in which a honeycomb substrate is coated with a catalyst support having an SOx keeping ability for keeping in its interior SOx contained in the exhaust gas, characterized in that a cell wall of said honeycomb substrate has a pore, the interior of the pore is filled with said catalyst support so that the pore is coated, a surface of said cell wall is also coated with said catalyst support, and a catalyst support coating ratio that is defined as the ratio of the mass of the catalyst support applied on said cell wall surface to the mass of the catalyst support applied in the pore in said cell wall has a value between 0.25 and 1.25.

Pores of the honeycomb substrate are continuous over a certain length in the cell walls. The ratio of the volume made up by the pores to the total volume of the honeycomb substrat is called porosity. Honeycomb substrates generally have porosities of approximately 60 to 70 percents. In the present invention, the higher the porosity is, the more highly the SOx keeping capacity, which will be described later, can be enhanced. Honeycomb substrates having a relatively high porosity include one made of cordierite or SiC.

The catalyst support has the SOx keeping ability, that is the ability of keeping SOx that has been contained in exhaust gas. Examples of the catalyst support are basic materials such as alumina (A1203), zirconia (Zr02) and spinel (MgA1204). The function of such basic supporting materials is not limited to keeping SOx in the interior thereof.

In the case where only the surface of the cell wall is mainly coated with the catalyst support as is the case with conventional catalysts, although the SOx contained in exhaust gas is caught by the catalyst supporting member, the SOx thus caught stays close to the surface of the catalyst substrate to hinder further SOx from being caught. Accordingly, the SOx keeping state in the exhaust gas purifying catalyst is saturated at an early stage, so that the exhaust gas purifying capacity is deteriorated.

In the exhaust gas purifying catalyst according to the present invention as described above, the pores are filled with the aforementioned catalyst support to coat the pores. With this feature, it is possible to keep SOx in the interior of the honeycomb substrate (i.e. in the pore portions). Therefore, the SOx keeping state in the exhaust gas purifying catalyst is not saturated at an early stage, and exhaust gas purifying ability is maintained for a relatively long time.

A feature that characterizes the present invention is the aforementioned catalyst support coating ratio. As the catalyst support coating ratio defied as the ratio of the mass of the catalyst support applied on the cell wall surface to the mass of the catalyst support applied in the pores in the cell wall becomes higher, SOx caught on the surface of the cell wall does not moves into the pores but tends to stay in the portion near the surface, whereby the SOx keeping capacity of the exhaus gas purifying catalyst is decreased. In contrast, as the catalyst support coating ratio becomes lower, the amount of SOx kept in the portion near the surface of the cell wall decreases, whereby the SOx keeping capacity of the entire exhaust gas purifying catalyst is decreased. Given the above situation, experiments performed on the SOx keeping capacity of exhaust gas purifying catalysts revealed that the exhaust gas purifying catalysts can exhibit its SOx keeping capacity more efficiently when the catalyst support coating ratio is within the aforementioned range of 0.25 to 1.25. In other words, in cases where the catalyst support coating ratio is in the above range, the exhaust gas purifying performance of the exhaust gas purifying catalyst is not significantly deteriorated even without performing SOx poisoning recovery control.

In the above-described exhaust gas purifying catalyst, the catalyst support coating ratio may have a value between 0.5 to 1.1. By arranging the catalyst support coating ratio to a value in this range, the exhaust gas purifying catalysts can exhibit its SOx keeping capacity still more efficiently.

In the exhaust gas purifying catalyst described in the foregoing, the basicity of the catalyst support applied in the pores in the cell wall may be made higher than the basicity of the catalyst support applied on the cell surface. With this feature, circulation of kept SOx is achieved, that is; SOx kept by the catalyst suppor on the cell wall surface is transported into the interior of the cell wall, and further SOx is caught on the cell wall surface. Thus, a larger amount of SOx can be kept by the exhaust gas purifying catalyst. In addition, since the SOx kept by the catalyst support in the pores in the cell wall has a relatively high basicity, the SOx stably stays in the pores in the cell wall. Consequently, the circulation of kept SOx on the cell wall surface is maintained more favorably.

To make the basicity of the catalyst support applied in the pores in the cell wall higher than the basicity of the catalyst support applied on the cell wall surface, for example, at least one of barium and lanthanum may be supported on the catalyst support applied in the pore in the cell wall, and at least one of potassium and lithium may be supported on the catalyst support applied on the cell wall surface.

In the exhaust gas purifying catalyst described in the foregoing, the catalyst support applied in the pore of the cell wall may have a particle diameter smaller than that of the catalyst support applied on the cell wall surface. With this feature, the pores in the cell wall can be easily filled with the catalyst support. Thus, the SOx keeping capacity of the exhaust gas purifying catalyst is enhanced. In addition, when the catalyst support applied on the cell wall surface has a relatively large particle diameter, macropores are formed on the cell wall surface. This leads to an increase in the surface area of the catalyst support applied as coating, which facilitates diffusion of exhaust gas. As a result, the SOx keeping capacity of the exhaust gas purifying catalyst is enhanced.

In the exhaust gas purifying catalyst described in the foregoing, a precious metal catalyst may be supported in the interior of the catalyst support applied in the pore in the cell wall. When a precious metal catalyst is supported in the interior of the catalyst support, formation of sulfate from SOx contained in exhaust gas is promoted in the interior of the catalyst support. Consequently, in the exhaust gas purifying catalyst, the SOx keeping capacity of the catalyst support remot from the cell wall surface, or the SOx keeping capacity of the catalyst support in the pores in the cell wall is increased.

To achieve the above-described object, there is provided a method of manufacturing an exhaust gas purifying catalyst used for purifying exhaust gas of an internal combustion engine, in which a honeycomb substrate having a pore in its cell wall is coated with a catalyst support having an SOx keeping ability for keeping in its interior SOx contained in the exhaust gas, characterized by an in-cell-wall precious metal catalyst supporting process of preliminarily causing a precious metal catalyst to be supported on said catalyst support to be applied in the pore in said cell wall, a cell wall interior coating process of filling the pore in said cell wall with said catalyst support on which said precious metal catalyst is supported to coat the pore, and a cell wall surface coating process of coating a surface of said cell wall with said catalyst support and causing a precious metal catalyst to be supported on it.

A feature that characterizes the above-described method of manufacturing an exhaust gas purifying catalyst resides in that the catalyst support for filling the pores in the cell wall of the honeycomb substrate is preliminarily processed to support a precious metal catalyst such as platinum (Pt) prior to coating for filling the pores with the catalyst support. With this feature, the precious metal catalyst can be easily contained in the catalyst support applied in the pores in the cell wall. Consequently, in the exhaust gas purifying catalyst the SOx keeping capacity of the catalyst support remote from the cell wall surface, or the SOx keeping capacity of the catalyst support in the pores in the cell wall can be increased, as described above.

In connection with this, a precious metal catalyst may be caused to be preliminarily supported on the catalyst support to be applied on the surface of the cell wall as in the case of the pores in the cell wall, or alternatively, a precious metal catalyst may be caused to be supported after coating with the catalyst support is performed.

According to the present invention, as per the above, it is possible to provide an exhaust gas purifying catalyst that does not suffer from significant deterioration in the exhaust gas purifying capacity even without performing SOx poisoning recovery control.

### (Brief Description of the Drawings)

Fig. 1 is a diagram schematically showing an exhaust gas purifying system of an internal combustion engine equipped with an exhaust gas purifying catalyst according to an embodiment of the present invention.
Fig. 2 shows a model of SOx trapping in an S-trapping catalyst for rapping SOx contained in exhaust gas.
Fig. 3 schematically shows the structure of the exhaust gas purifying catalyst according to the embodiment of the present invention.
Fig. 4 shows catalyst support applied on a honeycomb substrate in the exhaust gas purifying catalyst according to the embodiment of the present invention.
Fig. 5 is a graph showing a relationship between the coating thickness on the cell wall surface of the honeycomb substrate and the S-trapping rate of the exhaust gas purifying catalyst according to an embodiment (sample 1) of the present invention.
Fig. 6 a graph showing a relationship between the catalyst support coating ratio and the S-trapping rate of the exhaust gas purifying catalyst according to the embodiment (sample 1) of the present invention.
Fig. 7 shows a result of comparison of the S-trapping amount in exhaust gas purifying catalysts (samples 1 to 6) according to embodiments of the present invention and that in conventional exhaust gas purifying catalysts (conventional arts 1 and 2).
Fig. 8 shows a result of comparison of the NOx purification rate of the NOx catalyst in an exhaust gas purification system equipped with the exhaust gas purifying catalyst according to an embodiment (sample 1) of the present invention and an exhaust gas purification system equipped with the exhaust gas purifying catalyst according to conventional art 1, the NOx catalyst being provided in the downstream of the exhaust gas purifying catalyst.

### (Description of the Preferred Embodiments)

In the following, embodiments of the exhaust gas purifying catalyst and the method of manufacturing the exhaust gas purifying catalyst according to the present invention will be described with reference to the accompanying drawings.

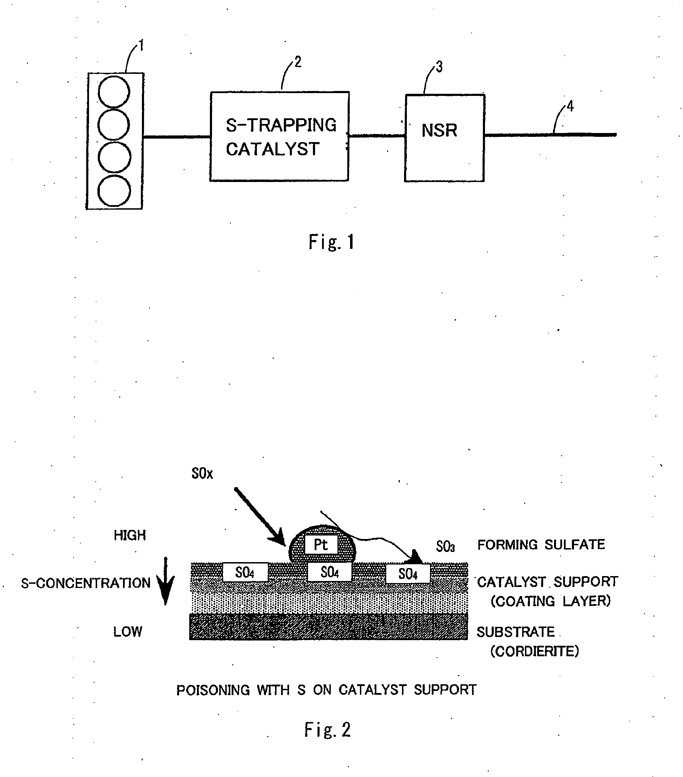

It should be firstly noted that the exhaust gas purifying catalyst according to the present invention is intended to catch Sox contained in the exhaust gas. (In connection with this, catching SOx in the exhaust gas will be sometimes to as "trapping SOx" hereinafter.) The exhaust gas purifying catalyst is provided in an exhaust gas purifying system of an internal combustion engine 1 shown in Fig. 1. The exhaust gas purifying system of the internal combustion engine 1 shown in Fig. 1 has an exhaust passage 4 through which exhaust gas from the internal combustion engine 1 flows. In the exhaust passage 4, an S-trapping catalyst 2 and an NOx storage reduction catalyst (which will be referred to as "NOx catalyst" and captioned as "NSR" in the drawings) 3 are provided in the mentioned order from the upstream to the downstream of the exhaust passage 4. The exhaust gas purifying catalyst according to the present invention is the S-trapping catalyst 2. In this exhaust gas purifying system, SOx contained in the exhaust gas is trapped (or caught) by the S-trapping catalyst 2, so that the amount of SOx flowing into the NOx catalyst 3 disposed downstream of the S-trapping catalyst 2 is reduced. Thus, SOx poisoning of the NOx catalyst 3 can be efficiently suppressed.

Here, the principle of trapping SOx contained in the exhaust gas by an ordinary S-trapping catalyst will be described with reference to Fig. 2. In the S-trapping catalyst in Fig. 2, the surface of a substrate made of cordierite is coated with a catalyst support. The catalyst support is, for example, made of alumina etc.. The of the catalyst support is also referred to as a coating layer. A precious metal catalyst such as platinum (Pt) is supported on the surface of the coating layer. An SOx occlusion material such as an alkali metal or an alkaline-earth metal may be supported on the surface of the coating layer.

In the case of the ordinary S-trapping catalyst formed in the above-described manner, SOx contained in the exhaust gas is further oxidized by the precious metal catalyst and trapped in the catalyst support to be kept therein as sulfate. The sulfate thus formed concentrates at portions close to the surface of the S-trapping catalyst. Consequently, the amount of SOx trapped by the catalyst support decreases gradually, and it becomes difficult for it to function as the S-trapping catalyst sufficiently. As a result, the NOx catalyst provided downstream of it will be SOx poisoned significantly, and there arises a need for performing SOx poisoning recovery control in the NOx catalyst.

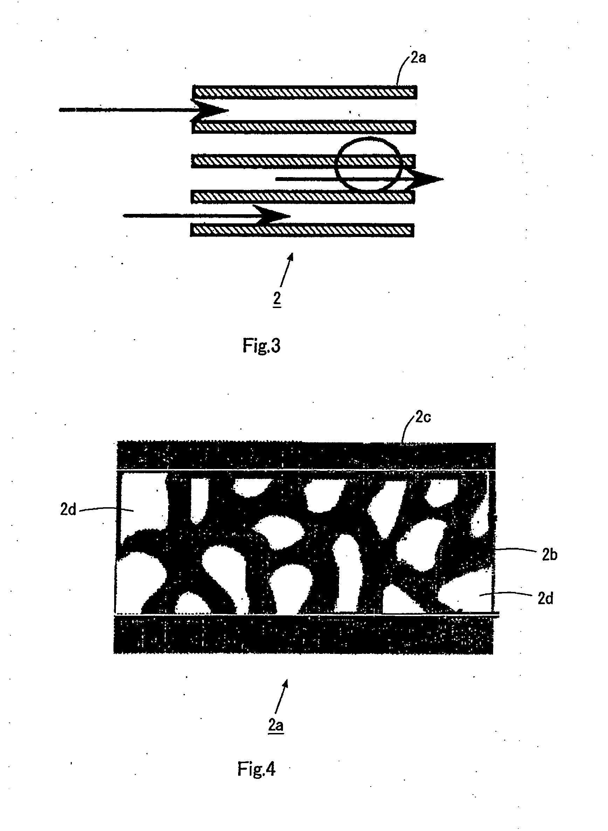

In view of this, in order to increase the amount of the SOx trapped by the S-trapping catalyst as much as possible to reduce the amount of the SOx flowing into the NOx catalyst in the downstream, S-trapping catalysts (six types of catalyst including samples 1 to 6) produced by the manufacturing method described in the following may be used as the S-trapping catalyst 2 according to the present invention. In the following, the manufacturing methods will be described with reference to Figs. 3 and 4.

The S-trapping catalyst 2 according to the present invention is a straight flow type catalyst as shown in Fig. 3. In connection with this, the arrows in Fig. 3 indicate exhaust gas flows. The cell wall 2a of the S-trapping catalyst 2 is what is called a honeycomb substrate, which is coated with a basic catalyst support such as alumina. The cell wall 2a of the honeycomb substrate has pores, and its porosity is approximately 60 to 70 percents. It is preferred that the porosity be made as high as possible within a modest range that does not spoil the rigidity of the catalyst. In the following, samples of the S-trapping catalyst 2 according to the present invention will be described in detail.

### (Sample 1)

Fig. 4 is an enlarged view showing the portion of the cell wall 2a that indicated by the circle in Fig. 3. As described the S-trapping catalyst 2 is composed of cell walls of the honeycomb substrate. The honeycomb substrate is a cordierite substrate. The substrate portions are represented by reference sign 2d (illustrated as white portions) in Fig. 4. The other portions are pores 2b in the honeycomb substrate 2d. In the S-trapping catalyst 2 according to the present invention, the pores 2b in the honeycomb substrate 2d are filled with catalyst support made of a basic supporting material such as alumina, zirconia or spinel. The filling is effected by what is called monolithic coating process. In addition to the filling of the pores 2b with the catalyst support, the surface of the cell walls 2c is also coated with the same catalyst support by monolithic coating process. The solid black portions in Fig. 4 represent the catalyst support filling the pores 2b. As per the above, in the Strapping catalyst 2 according to the present invention, the catalyst support is not only applied as coating on the surface of the cell wall of the honeycomb substrate 2d, but also applied as filler in the interior of the pores 2b of the S-trapping catalyst wall, unlike with conventional catalysts.

Next, platinum is caused to be supported on the catalyst support applied on the honeycomb substrate 2d. In addition, an alkali metal or an alkaline earth metal such as barium (Ba), lanthanum (La), potassium (K) or lithium (Li) is also supported on it as an SOx occlusion material.

SOx contained in the exhaust gas is oxidized by platinum and trapped, in the form of sulfate, by the S-trapping catalyst 2 produced in the above-described way, with the aid of the SOx occlusion material. Since the interior of the pores 2b of the honeycomb substrate 2d are filled with the catalyst support, the amount of the SOx that the entire S-trapping catalyst 2 can trap is increased.

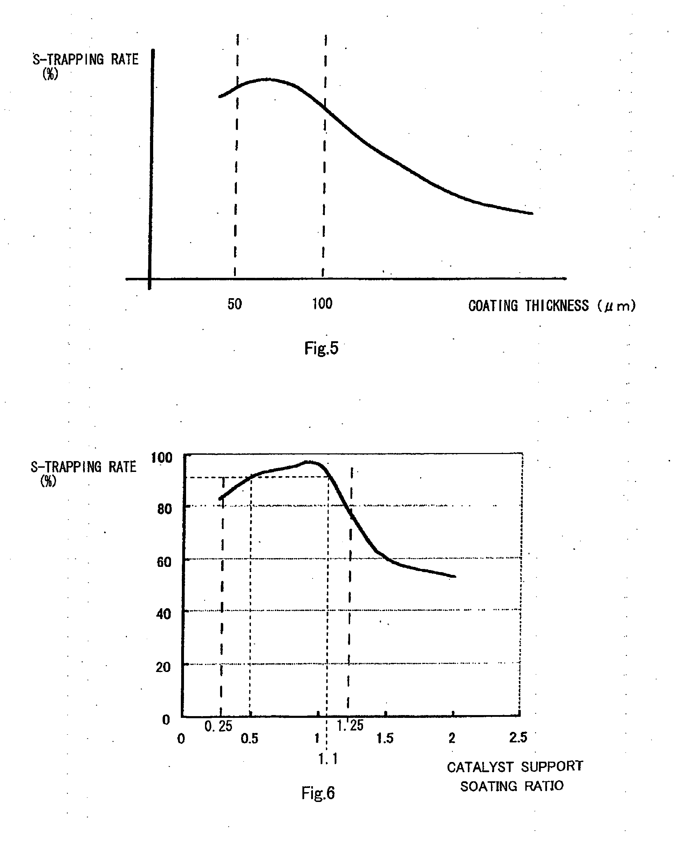

Fig. 5 shows a relationship between the amount of the catalyst support applied on the surface of the cell walls 2c and the S-trapping rate (wherein the amount of the catalyst support is represented in terms of coating thickness, in this embodiment). Here, the S-trapping rate is the ratio of the concentration of the SOx contained in the exhaust gas flowing into the S-trapping catalyst 2 and the concentration of the SOx contained in the exhaust gas flowing out of the S-trapping catalyst 2. The higher S-trapping rate means the higher performance of the S-trapping catalyst. As shown in Fig. 5, in this embodiment, the S-trapping rate falls within the highest range when the coating thickness on the surface of the cell wall 2c is in the range of approximately 50 to 100 µm. It is considered that the reasoning for this is that if the coating thickness on the surface of the cell wall 2c becomes small, the amount of the catalyst support for trapping the SOx decreases. On the other hand, it is considered that if the coating thickness on the surface of the cell wall 2c becomes large, the sulfate resulting from the trapped SOx tends to stay close to the surface of the cell wall 2c instead of moving to the inner-portion of the catalyst support, which makes further trapping of SOx difficult.

From the above reasoning, it is considered that the ratio of the amount of the catalyst support applied on the surface of the cell wall 2c and the amount of the catalyst support applied in the interior of the pores 2b of the honeycomb substrate 2d of the S-trapping catalyst 2 have a great influence on the S-trapping rate. The ratio of the amount of the catalyst support applied on the surface of the cell wall 2c to the amount of the catalyst support applied in the interior of the pores 2b of the honeycomb substrate 2d will be referred to as "the catalyst support coating ratio". Fig. 6 shows a relationship between the S-trapping rate and the catalyst support coating ratio.

As shown in Fig. 6, the S-trapping rate greatly varies depending on the catalyst support coating ratio. If it is assumed that the threshold value of the S-trapping rate that can sufficiently suppress inflowing of SOx into the NOx catalyst 3 shown in Fig. 1 is 80%, it is preferred that the catalyst support coating ratio be in the range of 0.25 to 1.25. More particularly, to achieve a relatively high S-trapping rate of 90%, it is preferred that the catalyst support coating ratio be in the range of 0.5 to 1.1.

### (Sample 2)

In the S-trapping catalyst 2 according to sample 2, the particle diameter of the catalyst support to be applied to the S-trapping catalyst 2 according to sample 1 is made smaller than 1 µm by milling, and coating of the honeycomb substrate 2d is performed under vacuum. By these features, the efficiency of filling the interior of the pores 2b with the catalyst support is made as high as possible, and the pores 2b are filled with a larger amount of the catalyst support.

### (Sample 3)

In this sample, coating of the interior of the pores 2b with the catalyst support is performed in the same way as in sample 2. What is different in sample 3 from sample 2 is that the particle diameter of the catalyst support used for coating the surface 2c of the cell wall 2a is designed to be equal to or larger than 1 µm. This means that the particle diameter of the catalyst support to be applied in the interior of the pores 2b and the particle diameter of the catalyst support to be applied on the cell wall surface 2c are designed to be different from each other. An advantage of making the particle diameter of the catalyst support to be applied in the interior of the pores 2b equal to or smaller than 1 µm is that the efficiency in filling the interior of the pores 2b with the catalyst support can be enhanced, as described above. On the other hand, an advantage of making the particle diameter of the catalyst support to be applied on the cell wall surface 2c equal to or larger than 1 µm is that macropores are formed by catalyst support particles, whereby the contact area of the exhaust gas and the catalyst support is increased.

### (Sample 4)

In the case where the material of the honeycomb substrate 2d is cordierite, a specific material (e.g. potassium) of the SOx occlusion material and the cordierite react with each other, whereby the rigidity of the S-trapping catalyst 2 is deteriorated. In view of this, in the S-trapping catalyst 2 according to sample 4, SiC that has a reactivity lower than that of the cordierite is used as the material of the honeycomb substrate 2d in sample 1 in order to ensure rigidity of the S-trapping catalyst 2 and to increase the occlusion capacity of the SOx occlusion material.

### (Sample 5)

In the S-trapping catalyst 2 according to sample 5, the basicity of the catalyst support in the pores 2b of the honeycomb substrate 2d and the basicity of the catalyst support on the cell wall surface 2c are changed from those in the S-trapping catalyst 2 according to sample 1. Specifically, barium or lanthanum is supported:on the catalyst support in the pores 2b of the honeycomb substrate 2d and potassium or lithium is supported on the catalyst support on the cell wall surface 2c so that the basicity of the former catalyst support is made higher than that of the latter.

The sulfate trapped by the SOx occlusion material supported on the cell wall surface 2c is likely to move to the inner portion of the S-trapping catalyst 2, namely into the interior of the pores 2b due to thermal energy. On the other hand, the catalyst support having a relatively high basicity on which barium or lanthanum is supported in the interior of the pores 2b has a characteristic of strongly trapping sulfate in the interior thereof. Consequently, SOx trapped on the cell wall surface 2c is sequentially transported to the inner portion and strongly kept therein. Accordingly, a cycle in which SOx is newly and sequentially caught by the catalyst support is created. Thus, the S-trapping rate by the S-trapping catalyst 2 can be increased.

### (Sample 6)

In the S-trapping catalyst 2 according to sample 6, prior to applying the catalyst support in the interior of the pores 2b of the S-trapping catalyst 2 according to sample 1, platinum in the form of powder is preliminary supported on the catalyst support. With this feature, platinum is present in the catalyst support that is in the interior of the pores 2b. In the case of the S-trapping catalyst according to sample 1, since the platinum is supported after the catalyst support is applied in the interior of the pores 2b, platinum is supported on the surface of the coating. However, in the case that platinum in the form of powder is preliminary supported on the catalyst support to be applied in the interior of the pores 2b as is the case with sample 6, it is possible to further promote formation of sulfate by means of platinum present in the catalyst support. Thus, the S-trapping amount in the interior of the pores 2 is increased, so that the S-trapping rate of the S-trapping catalyst 2 can be increased.

In the following, conventional S-trapping catalysts will be described for comparison with above-described samples 1 to 6.

### (Conventional Art 1)

In the S-trapping catalyst according to conventional art 1, a straight flow type honeycomb substrate 2d as shown in Fig. 3 is coated with a catalyst support (alumina), then platinum is provided to be supported thereon by impregnation, and then after drying, an SOx occlusion material is supported thereon.

### (Conventional Art 2)

The S-trapping catalyst according to conventional art 2 uses a so-called wall flow type honeycomb substrate 2d that is formed by alternately stoppering end portions of a straight flow type substrate like one shown in Fig. 3 with respect to the direction of the exhaust gas flow. The wall flow type honeycomb substrate 2d is coated with catalyst support (alumina) that has been milled to have a particle diameter equal to or smaller than 1µm, then platinum is provided to be supported thereon by impregnation, and then after drying, an SOx occlusion material is supported thereon.

### (Comparison of the S-trapping Catalysts according to the Invention and the Conventional Catalysts)

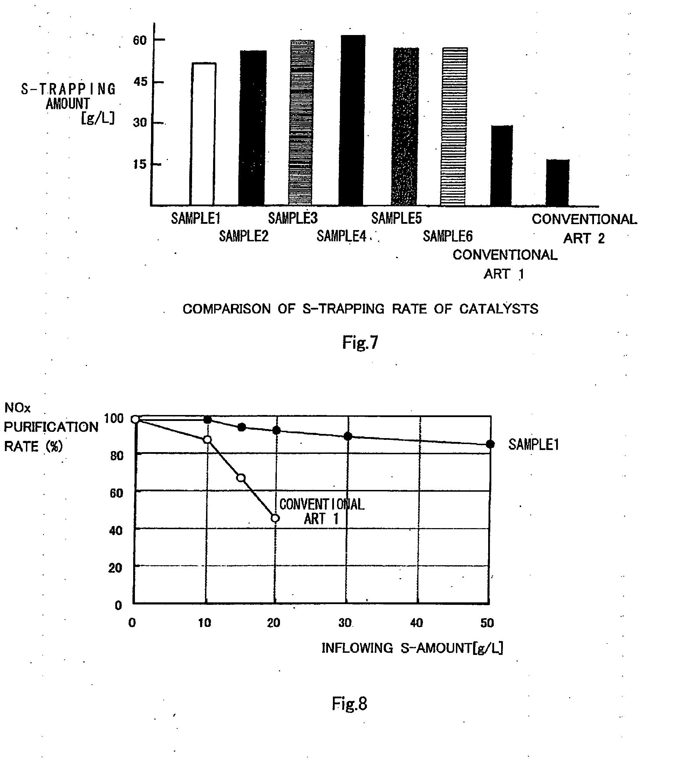

Fig. 7 shows a result of comparison of the S-trapping amounts by the S-trapping catalysts 2 according to samples 1 to 6 of the present invention and the S-trapping amounts of the S-trapping catalysts according to conventional arts 1 and 2. The S-trapping amounts shown in Fig. 7 are the S-trapping amounts of the respective S-trapping catalyst that were obtained by measurement performed in the exhaust gas purification system shown in Fig. 1 in the state that the exhaust gas of the internal combustion engine 1 is in a stationary lean condition (for example, in the state where lean-burn combustion is performed) and the temperature of the exhaust gas is in the range of 250 to 350 degrees Celsius. As will be clearly seen from Fig. 7, the S-trapping catalysts according to the present invention have higher S-trapping performance than the conventional S-trapping catalysts.

Fig. 8 shows a result of comparison of the NOx purification rate of the NOx catalyst 3 in an exhaust gas purification system (i.e. the exhaust gas purification system shown in Fig. 1) equipped with the S-trapping catalyst according to sample 1 of the present invention and an exhaust gas purification system equipped with the S-trapping catalyst according to conventional art 1. Here, the NOx purification rate is the ratio of the amount of the NOx contained in the exhaust gas flowing out of the NOx catalyst 3 to the amount of NOx contained in the exhaust gas flowing into the NOx catalyst 3. As will be seen from Fig. 8, as the amount of sulfur (S) contained in the exhaust gas discharged from the internal combustion engine 1 increases, the NOx purification rate of the NOx catalyst 3 of the exhaust gas purifying system equipped with the S-trapping catalyst according to sample 1 decreases moderately, while the NOx purification rate of the NOx catalyst 3 of the exhaust gas purifying system equipped with the S-trapping catalyst according to the conventional art decreases greatly. This means that the S-trapping catalyst according to the present invention (sample 1) has the higher S-trapping performance, and the amount of the SOx flowing into the NOx catalyst 3 disposed downstream of it is relatively small, and therefore, the NOx catalyst 3 is not easily poisoned by sulfur.

As per the above, the S-trapping catalysts according to samples 1 to 6 of the present invention constitute exhaust gas purifying catalysts that can maintain the capacity of trapping SOx contained in the exhaust gas for a relatively long time even without performing SOx poisoning recovery control and do not suffers from serious deterioration in the exhaust gas purifying performance.

It should be understood that the S-trapping.. catalyst according to the present invention is not limited to samples 1 to 6, but it may be any S-trapping catalyst that has features of these samples in any possible combination.

An exhaust gas purifying catalyst used for purifying exhaust gas of an internal combustion engine, in which a honeycomb substrate.is coated with a catalyst support having an SOx keeping ability for keeping in its interior SOx contained in the exhaust gas, wherein a cell wall of the honeycomb substrate has a pore, the interior of the pores is filled with the catalyst support so that the pore is coated, a surface of the cell wall is also coated with the catalyst support, and a catalyst support coating ratio that is defined as the ratio of the mass of the catalyst support applied on the cell wall surface to the mass of the catalyst support applied in the pore in the cell wall has a value between 0.25 and 1.25. Thus, there is provided an exhaust gas purifying catalyst that does not suffer from serious deterioration in the exhaust gas purifying capacity even without performing the SOx poisoning recovery control.

## Claims

1. An exhaust gas purifying catalyst used for purifying exhaust gas of an internal combustion engine (1), in which a honeycomb substrate (2d) is coated with a catalyst support having an SOx keeping ability for keeping in its interior SOx contained in the exhaust gas, **characterized in that**,
a cell wall (2a) of said honeycomb substrate (2d) has a pore (2b), and the interior of the pore (2b) is filled with said catalyst support so that the pore (2b) is coated, and
a surface of said cell wall (2a) is also coated with said catalyst support, and a catalyst support coating ratio that is defined as the ratio of the mass of the catalyst support applied on said cell wall surface (2c) to the mass of the catalyst support applied in the pore (2b) in said cell wall (2a) has a value between 0.25 and 1.25.

2. An exhaust gas purifying catalyst according to claim 1, wherein said catalyst support coating ratio has a value between 0.5 and 1.1.

3. An exhaust gas purifying catalyst according to claim 1 or 2, **characterized in that** the basicity of the catalyst support applied in the pore (2b) in said cell wall (2a) is higher than the basicity of the catalyst support applied on said cell wall surface (2c).

4. An exhaust gas purifying catalyst according to claim 3, **characterized in that** at least one of barium and lanthanum is supported on the catalyst support applied in the pore (2b) in said cell wall (2a), and at least one of potassium and lithium is supported on the catalyst support applied on said cell wall surface (2c).

5. An exhaust gas purifying catalyst according to any one of claims 1 to 4, **characterized in that** the catalyst support applied in the pore (2b) in said cell wall (2a) has a particle diameter smaller than that of the catalyst support applied on said cell wall surface (2c).

6. An exhaust gas purifying catalyst according to any one of claims 1 to 5, **characterized in that** a precious metal catalyst is supported in the interior of the catalyst support applied in the pore (2b) in said cell wall (2a).

7. A method of manufacturing an exhaust gas purifying catalyst used for purifying exhaust gas of an internal combustion engine (1), in which a honeycomb substrate (2d) having a pore (2b) in its cell wall (2a) is coated with a catalyst support having an SOx keeping ability for keeping in its interior SOx contained in the exhaust gas, **characterized by**:
an in-cell-wall precious metal catalyst supporting process of preliminarily causing a precious metal catalyst to be supported on said catalyst support to be applied in the pore (2b) in said cell wall (2a);
a cell wall interior coating process of filling the pore (2b) in said cell wall (2a) with said catalyst support on which said precious metal catalyst is supported to coat the pore (2b); and
a cell wall surface coating process of coating a surface (2c) of said cell wall (2a) with said catalyst support and causing a precious metal catalyst to be supported on it.

8. A method of manufacturing an exhaust gas purifying catalyst according to claim 7, **characterized in that** said cell wall surface coating process includes:
a first process of preliminary causing the precious metal catalyst to be supported on the catalyst support to be applied on the surface (2c) of said cell wall (2a); and
a second process of coating the surface (2c) of said cell wall (2a) with the catalyst support on which the precious metal catalyst has been supported through said first process.
